(19) Europäisches Patentamt
European Patent Office
Office européen des brevets

(11) **EP 1 447 583 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **04002998.5**

(22) Anmeldetag: **11.02.2004**

(51) Int Cl.:
***F16D 48/06*** *(2006.01)*

(54) **Verfahren zum Durchführen von zumindest einer Schutzstrategie für die Kupplung eines automatisierten Schaltgetriebes eines Fahrzeuges**

Method for performing a clutch protection strategy for an automatic gearbox clutch

Procédé de mise en oeuvre d'une stratégie de protection de l'embrayage de la boîte de vitesses automatique d'un véhicule

(84) Benannte Vertragsstaaten:
**AT BE BG CH CY CZ DE DK EE ES FI FR GB GR HU IE IT LI LU MC NL PT RO SE SI SK TR**

(30) Priorität: **12.02.2003 DE 10305678**

(43) Veröffentlichungstag der Anmeldung:
**18.08.2004 Patentblatt 2004/34**

(73) Patentinhaber: **Schaeffler Technologies AG & Co. KG**
**91074 Herzogenaurach (DE)**

(72) Erfinder:
• **Henneberger, Klaus Dr.**
**77815 Bühl (DE)**
• **Schweizer, Alexander**
**75045 Walzbachtal-Jöhlingen (DE)**

(56) Entgegenhaltungen:
**EP-A- 0 375 162    EP-A- 0 393 910**
**DE-A- 10 200 991    DE-A- 10 209 839**
**DE-A- 19 841 917    FR-A- 2 836 870**

**Beschreibung**

Die Erfindung betrifft ein Verfahren zum Durchführen von mindestens einer Schutzstrategie für die Kupplung eines automatisierten Schaltgetriebes eines Fahrzeuges während einer aktivierten Kriechfunktion.

Aus der Fahrzeugtechnik sind Fahrzeuge mit einem automatisierten Schaltgetriebe bekannt, bei denen beispielsweise eine Kriechfunktion durchgeführt wird. Dabei wird das Fahrzeug mit geringer Geschwindigkeit vorwärts bewegt: Wenn sich beispielsweise das Fahrzeug an einer Steigung befindet, kann das Fahrzeug durch diese Funktion für eine bestimmte Zeit gehalten werden, ohne dass das Fahrzeug zurückrollt.

Die EP 375 162 A2 offenbart ein Verfahren zur Kupplungssteuerung, bei dem in Abhängigkeit von der Betätigung des Bremspedals eine Kriechfunktion gesteuert wird.

Die DE 102 09 839 A1 beschreibt ein Kraftfahrzeug mit einer automatisierten Kupplung, bei dem während einer Kriechfunktion das an der Kupplung anliegende Moment in Abhängigkeit vom Bremsdruck aufgebaut wird. Wird die Kupplung durch einen hohen Energieeintrag zu heiß, wird das Moment verringert oder abgebaut.

Die FR 2 836 870 A1 beschreibt ein Verfahren zur Steuerung einer Überschneidungsschaltung von zwei in einem Doppelkupplungsgetriebe eingesetzten Reibungskupplungen, wobei der Reibeingriff der beiden Kupplungen in Abhängigkeit von deren Temperaturen erfolgt.

Es hat sich jedoch gezeigt, dass bei kontinuierlichem Kriechen, ohne dass sich das Fahrzeug bewegt, die Kupplung des automatisierten Schaltgetriebes (ASG) erheblichen thermischen Belastungen ausgesetzt wird. Um dies zu vermeiden, ist es aus dem Stand der Technik bekannt, dass das Kupplungsmoment reduziert wird. Dabei ergibt sich der Nachteil, dass sich ein an einer Steigung befindendes Fahrzeug durch die Reduzierung des Kupplungsmomentes plötzlich zurückrollt. Dies kann zu gefährlichen Fahrsituationen führen, insbesondere wenn sich beispielsweise der Fahrer nicht mehr im Fahrzeug befindet.

Demnach liegt der Erfindung die Aufgabe zugrunde, ein Verfahren der eingangs genannten Gattung vorzuschlagen, bei dem zumindest eine Schutzstrategie situationsangepasst aktiviert wird, so dass gefährliche Situationen vermieden werden.

Diese Aufgabe wird erfindungsgemäß durch die Merkmale des Patentanspruches 1 gelöst.

Demnach wird ein erfindungsgemäßes Verfahren zum Durchführen von zumindest einer Schutzstrategie für die Kupplung eines automatisierten Schaltgetriebes eines Fahrzeuges, insbesondere während einer aktivierten Kriechfunktion, vorgeschlagen, bei dem unter Berücksichtigung von zumindest einem Aktivierungskriterium wenigstens eine entsprechende Schutzstrategie für die Kupplung durchgeführt wird. Somit kann situationsangepasst die thermische Belastung an der Kupplung reduziert werden, ohne dass Komforteinbußen oder gefährliche Fahrsituationen auftreten. Insgesamt ermöglicht das erfindungsgemäße Verfahren, dass bei steigenden thermischen Belastungen der Kupplung auch beim Durchführen der Schutzstrategie weiterhin eine sichere Betriebsweise des Fahrzeuges gewährleistet wird. Insbesondere die Kombination von verschiedenen Aktivierungskriterien für eine oder mehrere Schutzstrategien ist dabei besonders vorteilhaft.

Gemäß einer Weiterbildung der Erfindung kann als Aktivierungskriterium z. B. eine Zeitsteuerung oder dergleichen verwendet werden, wobei geprüft wird, ob die Kupplung während einer vorbestimmten Zeitspanne schlupft und das Fahrpedal betätigt wird. Wenn während der gewählten Zeitspanne, welche z. B. den Wert von 4 bis 6 Sekunden annehmen kann, die Kupplung dauerhaft schlupft und das Fahrpedal betätigt wird, kann in vorteilhafter Weise eine geeignete Schutzstrategie eingeleitet werden. Vorzugsweise kann bei einer zeitgesteuerten Aktivierung als Schutzstrategie die Kupplung bevorzugt mittels einer langsamen Wegrampe oder dergleichen geschlossen werden. Es ist auch möglich, dass andere Werte für die zu wählende Zeitspanne verwendet werden.

Im Rahmen einer weiteren Ausgestaltung der Erfindung kann vorgesehen sein, dass als Aktivierungskriterium ein Temperaturmodell mit einer vorbestimmten Kupplungsgrenztemperatur verwendet wird. Dies bedeutet, dass bei Erreichen der vorzugebenden Kupplungsgrenztemperatur von z. B. etwa 250°C ebenfalls eine vorbestimmte Schutzstrategie aktiviert wird. Beispielsweise kann bei einer temperaturmodellabhängigen Aktivierung als Schutzstrategie das Ausschalten des Motors oder dergleichen vorgesehen werden.

Erfindungsgemäß kann als weiteres Aktivierungskriterium zum Auslösen einer Schutzstrategie ein kurzfristig aufgebrachter Energieeintrag oder dergleichen an der Kupplung berücksichtigt werden. Auf diese Weise wird eine gute Reproduzierbarkeit und eine situationsangepasste Aktivierung einer Schutzstrategie ermöglicht. Vorzugsweise kann der kurzfristige Energieeintrag durch folgende Formel berechnet werden:

$$E(t) = \int_{t_0}^{t} (Trq_{Cl,Act} \cdot |\omega_{Eng} - \omega_{InpShaft}| - P_0)\, dt$$

wobei

$P_0$ = die Korrekturleistung;

$t_0$ = die Startzeit;

$Trq_{Cl,Act}$ = das aktuelle Kupplungsmoment

$\omega_{Eng}$ = Drehzahl des Motors und

$\omega_{InpShaft}$ = Drehzahl der Getriebeeingangswelle

sind.

Ab einer jeweils zu wählenden Startzeit $t_0$ kann die an der Kupplung aufgebrachte Leistung unter Berücksichtigung einer Korrekturleistung $P_0$ aufintegriert werden. Der Anteil der Korrekturleistung bei dieser Formel ermöglicht die Berücksichtigung eines Energieeintrages in die Kupplung, welcher dauerhaft nicht zu einer Erwärmung der Kupplung führt. Dabei sollte beachtet werden, dass im Fall, wenn für die Korrekturleistung $P_0 > 0$ gilt, eine geeignete Begrenzung des Energieeintrages $E(t)$ sichergestellt wird, so dass ständig für den Energieeintrag $E(t) > 0$ gilt.

Wenn der berechnete kurzfristige Energieeintrag $E(t)$ eine bestimmte, applizierbare Energieeintragsschwelle $E_{thres}$ übersteigt oder dieser entspricht, können eine oder mehrere Schutzstrategien aktiviert werden.

Wenn der Wert des Energieeintrags $E(t)$ nicht explizit zurückgesetzt wird, ergibt sich mit einem Wert der Korrekturleistung $P_0 > 0$ ein einfaches Temperaturmodell. Es ist jedoch auch möglich, dass zusätzlich unter bestimmten Randbedingungen der Energieeintrag $E(t)$ zurückgesetzt wird, wobei sich dann in vorteilhafter Weise die Reproduzierbarkeit der Aktivierung einer Schutzstrategie deutlich erhöht. Im Hinblick auf eine Anwendung als Aktivierungskriterium für die Zuziehfunktion der Kupplung kann der zu berechnende Energieeintrag z. B. bei einem Pedalwert von 0 oder dergleichen zurückgesetzt werden. Dies bedeutet, dass der Leerlaufschalter aktiviert ist.

Gemäß einer vorteilhaften Weiterbildung der Erfindung kann das vorgenannte Aktivierungskriterium um z. B. eine Mindestansprechzeit und/oder eine maximale Ansprechdauer erweitert werden.

Im Rahmen einer nächsten Ausgestaltung der vorliegenden Erfindung kann als Schutzstrategie vorzugsweise vorgesehen sein, dass der Motor nach Vorliegen eines der Aktivierungskriterien ausgeschaltet wird. Dies kann z. B. gemäß einer Weiterbildung der Erfindung vorzugsweise durch einen Befehl des Getriebesteuergeräts an das Motorsteuergerät erfolgen. Beispielsweise kann das Ausschalten des Motors in Abhängigkeit von den Kriechbedingungen erfolgen. Es ist auch möglich, dass vor dem Ausschalten des Motors eine Fahrerwarnung oder dergleichen durchgeführt wird. Besonders vorteilhaft ist es, wenn nach dem Ausschalten des Motors die Kupplung geschlossen wird.

Eine nächste Weiterbildung der Erfindung kann vorsehen, dass als Schutzstrategie die Kriechneigung reduziert oder deaktiviert wird. Es ist auch denkbar, dass als Schutzstrategie das Anfahren im zweiten Gang verhindert wird. Dies kann z. B. durch das Deaktivieren des Winterprogramms erfolgen. Als weitere Schutzstrategie kann auch vorgesehen sein, dass die Kupplung bei Vorliegen eines Aktivierungskriteriums über eine geeignete Funktion geschlossen wird, um den Dauerschlupf an der Kupplung zu beenden.

Das erfindungsgemäße Verfahren kann bevorzugt bei sämtlichen automatisierten Getrieben, wie z. B. ASG-, Parallelschaltgetriebe (PSG)- oder dergleichen Systemen verwendet werden, wobei die jeweils auszuführenden Schutzstrategien in die Getriebesteuerung implementiert werden können.

Weitere Vorteile und vorteilhafte Ausgestaltungen ergeben sich aus den Unteransprüchen und aus der nachfolgend beschriebenen Zeichnung.

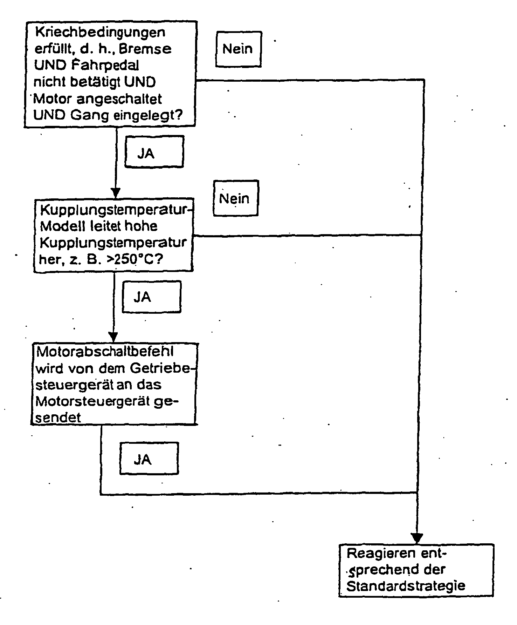

Die einzige Figur zeigt ein Ablaufdiagramm eines möglichen Ausführungsbeispiels des erfindungsgemäßen Verfahrens.

Bei diesem Ausführungsbeispiel des erfindungsgemäßen Verfahrens wird zunächst geprüft, ob die Kriechbedingungen vorliegen. Dies bedeutet, dass z. B. die Bremse und das Fahrpedal nicht betätigt werden, sowie der Motor angeschaltet und ein Gang eingelegt ist. Somit wird geprüft, ob die Kriechbedingungen vorliegen.

Wenn diese Bedingungen vorliegen, wird als Aktivierungskriterium anhand eines Temperaturmodells die Kupplungsgrenztemperatur abgefragt. Wenn die Kupplungsgrenztemperatur über 250°C liegt, wird eine Schutzstrategie für die Kupplung aktiviert. Wenn die vorgenannten Kriechbedingungen nicht vorliegen, erfolgt bei dem erfindungsgemäßen Verfahren eine Standardstrategie, bei der z. B. die Kupplung geschlossen wird, wenn der Motor abgeschaltet und ein Gang eingelegt ist.

Wenn jedoch die Kupplungsgrenztemperatur zumindest erreicht ist, wird von dem Getriebesteuergerät (TCO) an das Motorsteuergerät (ECO) ein Befehl gesendet, um den Motor auszuschalten.

Nachdem der Motor abgeschaltet worden ist, kann bei dem erfindungsgemäßen Verfahren die vorgenannte Standardstrategie durchgeführt werden. Die Standardstrategie umfasst z. B. bei einem automatisierten Schaltgetriebe (ASG) das Schließen der Kupplung, wenn die Situation vorliegt, dass der Motor abgeschaltet und ein Gang eingelegt ist. Dieser Teil des erfindungsgemäßen Verfahrens ist wichtig, um zu gewährleisten, dass sich das Fahrzeug nach dem Durchführen der Schutzstrategie in einem sicheren Fahrzustand befindet. Der Gang ist dann nämlich eingelegt, die Kupplung geschlossen und der Motor abgeschaltet. Somit kann der Fahrer den Motor wie gewohnt neu starten.

Alternativ kann das Abschalten des Motors durch ein Warnsignal dem Fahrer vorher angekündigt werden. Beispielsweise kann das Warnsignal einige Sekunden, z. B. 10 Sekunden oder dergleichen, vor dem Abschalten des Motors, also vor dem Senden des Befehls von dem Getriebesteuergerät an das Motorsteuergerät, durchgeführt werden.

**Patentansprüche**

1. Verfahren zum Durchführen von zumindest einer Schutzstrategie für die Kupplung eines automatisierten Schaltgetriebes eines Fahrzeuges mit einem Getriebsteuergerät während einer aktivierten Kriechfunktion, wobei in Abhängigkeit von zumindest einem Aktivierungskriterium eine Schutzstrategie für die Kupplung durchgeführt wird, so dass die thermische Belastung an der Kupplung reduziert wird, **dadurch gekennzeichnet, dass** die Schutzstrategie darin besteht, dass bei Erreichen eines Aktivierungskriteriums der Motor abgeschaltet wird, wobei das Abschalten des Motors über ein von dem Getriebesteuergerät (TCU) an das Motorsteuergerät (ECU) gesendetes Signal durchgeführt wird, wenn die Kriechbedingungen vorliegen und als Aktivierungskriterium ein aufgebrachter Energieeintrag $E(t)$ an der Kupplung berücksichtigt wird.

2. Verfahren nach Anspruch 1, **dadurch gekennzeichnet, dass** als Aktivierungskriterium eine Zeitsteuerung verwendet wird, bei der geprüft wird, ob die Kupplung während einer festzulegenden Zeitspanne schlupft und das Fahrpedal betätigt wird.

3. Verfahren nach Anspruch 2, **dadurch gekennzeichnet, dass** als Wert für die Zeitspanne etwa 4 s bis 6 s gewählt werden.

4. Verfahren nach einem der Ansprüche 1 bis 3, **dadurch gekennzeichnet, dass** als Aktivierungskriterium ein Kupplungstemperaturmodell verwendet wird.

5. Verfahren nach Anspruch 4, **dadurch gekennzeichnet, dass** bei dem Kupplungstemperaturmodell eine Kupplungsgrenztemperatur von etwa 250 °C gewählt wird.

6. Verfahren nach einem der vorangehenden Ansprüche, **dadurch gekennzeichnet, dass** der Energieeintrag $E(t)$ nachfolgender Formel berechnet wird:

$$E(t) = \int_{t_0}^{t} (Trq_{Cl,Act} \cdot \left| \omega_{Eng} - \omega_{InpShaft} \right| - P_0) dt$$

wobei

$P_0$ = Korrekturleistung;
$t_0$ = Startzeit;
$Trq_{Cl,Act}$ = aktuelles Kupplungsmoment
$\omega_{Eng}$ = Drehzahl des Motors
$\omega_{InpShaft}$ = Drehzahl der Getriebeeingangswelle

7. Verfahren nach Anspruch 6, **dadurch gekennzeichnet, dass**, wenn für die Korrekturleistung $P_0 > 0$ gilt, der Energieeintrag $E(t)$ derart begrenzt wird, dass für den Energieeintrag E(t) $\geq 0$ gilt.

8. Verfahren nach Anspruch 6 oder 7, **dadurch gekennzeichnet, dass** eine Schutzstrategie aktiviert wird, wenn der Energieeintrag $E(t)$ größer gleich einer applizierbaren Energieeintragsschwelle $E_{Thres}$ ist.

9. Verfahren nach einem der Ansprüche 6 bis 8, **dadurch gekennzeichnet, dass** der Energieeintrag $E(t)$ als Aktivierungskriterium mit einer Mindestansprechzeit und/oder mit einer maximalen Ansprechdauer kombiniert wird.

10. Verfahren nach Anspruch 1, **dadurch gekennzeichnet, dass** vor dem Abschalten des Motors eine Fahrerwarnung durchgeführt wird.

11. Verfahren nach einem der Ansprüche 1 bis 10, **dadurch gekennzeichnet, dass** nach dem Abschalten des Motors die Kupplung geschlossen wird.

**12.** Verfahren nach einem der vorangehenden Ansprüche, **dadurch gekennzeichnet, dass** als Schutzstrategie die Kriechneigung reduziert oder deaktiviert wird.

**13.** Verfahren nach einem der vorangehenden Ansprüche, **dadurch gekennzeichnet, dass** als Schutzstrategie ein Anfahren im zweiten Gang verhindert wird.

**14.** Verfahren nach einem der vorangehenden Ansprüche, **dadurch gekennzeichnet, dass** als Schutzstrategie die Kupplung über eine vorbestimmte Wegfunktion geschlossen wird.

**Claims**

**1.** Method for performing at least one clutch protection strategy for an automatic gearbox clutch of a vehicle having a gearbox control unit during an activated creeping function, wherein a clutch protection strategy is performed as a function of at least one activation criterion, with the result that the thermal loading on the clutch is reduced, **characterized in that** the protection strategy consists in switching off the engine when an activation criterion is met, wherein the engine is switched off by means of a signal which is transmitted from the gearbox control unit (TCU) to the engine control unit (ECU) when the creeping conditions are satisfied, and an applied energy input $E(\underline{t})$ at the clutch is taken into account as an activation criterion.

**2.** Method according to Claim 1, **characterized in that** a timing operation during which it is checked whether the clutch slips during a time period which is to be defined and the accelerator pedal is activated is used as an activation criterion.

**3.** Method according to Claim 2, **characterized in that** approximately 4 s to 6 s are selected as a value for the time period.

**4.** Method according to one of Claims 1 to 3, **characterized in that** a clutch temperature model is used as an activation criterion.

**5.** Method according to Claim 4, **characterized in that** a clutch limiting temperature of approximately 250°C is selected in the clutch temperature model.

**6.** Method according to one of the preceding claims, **characterized in that** the energy input $E(t)$ is calculated according to the following formula:

$$E(t) = \int_{t_0}^{t} (Trq_{Cl,Act} \cdot |\omega_{Eng} - \omega_{InpShaft}| - P_0)dt$$

where

$P_0$ = Correction power;
$t_0$ = Starting time;
$Trq_{Cl,Act}$ = Current clutch torque;
$\omega_{Eng}$ = Rotational speed of the engine;
$\omega_{InpShaft}$ = Rotational speed of the gearbox input shaft.

**7.** Method according to Claim 6, **characterized in that**, if for the correction power $P_0 > 0$, the energy input E(t) is limited in such a way that for the energy input $E(t) \geq 0$.

**8.** Method according to Claim 6 or 7, **characterized in that** a protection strategy is activated if the energy input E(t) is greater than or equal to an energy input threshold $E_{Thres}$ which can be applied.

**9.** Method according to one of Claims 6 to 8, **characterized in that** the energy input $E(t)$ is combined as an activation criterion with a minimum response time and/or with a maximum response period.

**10.** Method according to Claim 1, **characterized in that** a driver warning is issued before the engine is switched off.

**11.** Method according to one of Claims 1 to 10, **characterized in that** the clutch is closed after the engine is switched off.

**12.** Method according to one of the preceding claims, **characterized in that** the tendency to creep is reduced or deactivated as a protection strategy.

**13.** Method according to one of the preceding claims, **characterized in that** starting in the second gearspeed is prevented as a protection strategy.

**14.** Method according to one of the preceding claims, **characterized in that** the clutch is closed over a predetermined travel function as a protection strategy.

**Revendications**

**1.** Procédé de mise en oeuvre d'au moins une stratégie de protection de l'embrayage de la boîte de vitesses automatisée d'un véhicule avec un appareil de commande de boîte de vitesses lorsqu'une fonction de rampement est activée, une stratégie de protection de l'embrayage étant mise en oeuvre en fonction d'au moins un critère d'activation, de façon à réduire la charge thermique au niveau de l'embrayage, **caractérisé en ce que** la stratégie de protection consiste à déconnecter le moteur lorsqu'un critère d'activation est atteint, la déconnexion du moteur étant mise en oeuvre par le biais d'un signal envoyé par l'appareil de commande de boîte de vitesses (TCU) à l'appareil de commande du moteur (ECU) lorsque les conditions de rampement sont remplies et un apport d'énergie E(t) appliqué à l'embrayage étant pris en compte comme critère d'activation.

**2.** Procédé selon la revendication 1, **caractérisé en ce que** le critère d'activation utilisé est une commande de durée permettant de contrôler si l'embrayage patine pendant un intervalle de temps à déterminer et que la pédale d'accélération est actionnée.

**3.** Procédé selon la revendication 2, **caractérisé en ce que** la valeur choisie pour l'intervalle de temps correspond à environ 4 s à 6 s.

**4.** Procédé selon l'une quelconque des revendications 1 à 3, **caractérisé en ce que** le critère d'activation utilisé est un modèle de température de l'embrayage.

**5.** Procédé selon la revendication 4, **caractérisé en ce qu'**une température limite d'embrayage d'environ 250 °C est choisie comme modèle de température de l'embrayage.

**6.** Procédé selon l'une quelconque des revendications précédentes, **caractérisé en ce que** l'apport d'énergie E(t) est calculé en fonction de la formule suivante :

$$E(t) = \int_{t_0}^{t} (Trq_{Cl,Act} \cdot \left| \omega_{Eng} - \omega_{InpShaft} \right| - P_0) dt$$

où :

$P_0$ = puissance de correction
$t_0$ = instant du démarrage
$Trq_{Cl,Act}$ = couple d'embrayage actuel
$\omega_{Eng}$ = vitesse de rotation du moteur
$\omega_{InpShaft}$ = vitesse de rotation de l'arbre de boîte de vitesses

**7.** Procédé selon la revendication 6, **caractérisé en ce que** lorsque $P_0 > 0$ s'applique pour la puissance de correction, l'apport d'énergie E(t) est limité de telle sorte que $E(t) \geq 0$ s'applique pour l'apport d'énergie.

**8.** Procédé selon la revendication 6 ou 7, **caractérisé en ce qu'**une stratégie de protection est activée lorsque l'apport d'énergie E(t) est de même importance qu'un seuil d'apport d'énergie $E_{Thres}$ applicable.

**9.** Procédé selon l'une quelconque des revendications 6 à 8, **caractérisé en ce que** l'apport d'énergie E(t) servant de critère d'activation est combiné à un temps de fonctionnement minimal et/ou à une durée de fonctionnement maximale.

**10.** Procédé selon la revendication 1, **caractérisé en ce qu'**un avertissement du conducteur est mis en oeuvre avant de déconnecter le moteur.

**11.** Procédé selon l'une quelconque des revendications 1 à 10, **caractérisé en ce que** l'embrayage est fermé après déconnexion du moteur.

**12.** Procédé selon l'une quelconque des revendications précédentes, **caractérisé en ce que** la stratégie de protection utilisée permet de réduire ou de désamorcer la tendance à ramper.

**13.** Procédé selon l'une quelconque des revendications précédentes, **caractérisé en ce que** la stratégie de protection utilisée permet d'empêcher un démarrage en deuxième vitesse.

**14.** Procédé selon l'une quelconque des revendications précédentes, **caractérisé en ce que** la stratégie de protection utilisée permet de fermer l'embrayage par le biais d'une fonction de voie prédéterminée.

Kriechbedingungen erfüllt, d. h., Bremse UND Fahrpedal nicht betätigt UND Motor angeschaltet UND Gang eingelegt?

Nein

JA

Kupplungstemperatur-Modell leitet hohe Kupplungstemperatur her, z. B. >250°C?

Nein

JA

Motorabschaltbefehl wird von dem Getriebe-steuergerät an das Motorsteuergerät ge-sendet

JA

Reagieren ent-sprechend der Standardstrategie

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 375162 A2
- DE 10209839 A1
- FR 2836870 A1